# EUROPEAN PATENT APPLICATION

(11) **EP 0 892 194 A1**
(43) Date of publication of application: **20.01.1999**
(21) Application number: 98202361.6
(22) Date of filing: 14.07.1998
(51) Int. Cl.: F16H 55/30, F16H 55/46, F16H 55/48

(54) **Method for manufacturing a divisible sprocket wheel, a divisible sprocket wheel manufactured according to this method and an indivisible sprocket wheel for use in this method**

(30) Priority: 14.07.1997 NL 1006581
(71) Applicant: MCC Nederland B.V., NL-2691 GZ 's-Gravenzande (NL)
(72) Inventor: van der Knaap, Maurice Cornelius Antonius, 2512 AB Den Haag (NL); Verduijn, Gijsbertus Johannes, 4844 SC Terheijden (NL)
(74) Representative: Smulders, Theodorus A.H.J., Ir.

(57) **Abstract**

A method for manufacturing a divisible sprocket wheel (1) manufactured from plastic, comprising two wheel halves, each wheel half having a toothed rim portion (2), a hub portion (3) and a disk-shaped body (4) connecting the toothed rim portion (2) and the hub portion (3), characterized in that from a first indivisible sprocket wheel (1) having a complete toothed rim (2), a first wheel half (1) is manufactured by dividing the first indivisible sprocket wheel (1) substantially into two parts along a predetermined radial dividing line (A-A), that from a second indivisible sprocket wheel having a complete toothed rim, the second wheel half is manufactured by dividing the second indivisible sprocket wheel substantially into two parts along the same predetermined dividing line as the first indivisible sprocket wheel, and that both thus formed sprocket wheel halves are provided, in predetermined portions adjoining the dividing line, with openings (9,10) for receiving fasteners.

## Description

The invention relates to a method for manufacturing a divisible sprocket wheel manufactured from plastic, comprising two wheel halves which each have a toothed rim portion, a hub portion and a disk-shaped body connecting the toothed rim portion and the hub portion. The invention also relates to a divisible sprocket wheel manufactured according to this method, in which the wheel halves are mounted together by means of fasteners.

Such divisible sprocket wheels are for instance known from Dutch patent applications 9200519 and 1000907. These sprocket wheels are manufactured by injection molding and the wheel halves abut against each other by axial faces. These sprocket wheels are highly satisfactory, but have the drawback that each size of sprocket wheel requires a separate mold. It is generally known that such molds are costly. Hence, for smaller series of divisible sprocket wheels, it is highly unattractive to have a separate mold manufactured therefor.

The object of the invention is to provide a method for manufacturing a divisible sprocket wheel, wherein the sprocket wheels can be produced in an economically attractive manner also in the case of small numbers.

To this end, according to a first aspect, the invention provides a method of the above-mentioned type, characterized in that from a first indivisible sprocket wheel having a complete toothed rim, a first wheel half is manufactured by dividing the first indivisible sprocket wheel substantially into two parts along a predetermined radial dividing line, that from a second indivisible sprocket wheel having a complete toothed rim, the second wheel half is manufactured by dividing the second indivisible sprocket wheel substantially into two parts along the same predetermined dividing line as the first indivisible sprocket wheel, that after the division, each of the wheel halves is made thinner in predetermined portions of the body of the sprocket wheel, which portions are located on both sides of the hub opening and adjoin the dividing line, and that both thus formed sprocket wheel halves are provided, in the predetermined portions adjoining the dividing line, with axial openings for receiving fasteners.

According to a second aspect, the invention provides a method of the above-mentioned type, characterized in that from a first indivisible sprocket wheel having a complete toothed rim, whose disk-shaped body comprises two face portions located radially opposite each other on both sides of the hub opening, one of these face portions being staggered in axial direction to a first side relative to the plane of the disk-shaped body, and the other being staggered in axial direction to a second, opposite side, a first wheel half is manufactured by dividing the first indivisible sprocket wheel substantially into two parts along a predetermined radial dividing line adjoining the opposite face portions, that from a second indivisible sprocket wheel having a complete toothed rim, which is identical to the first indivisible sprocket wheel, the second wheel half is manufactured by dividing the second indivisible sprocket wheel substantially into two parts along the same predetermined dividing line as the first indivisible sprocket wheel, and that both thus formed sprocket wheel halves are provided, in their opposite face portions, with openings for receiving fasteners.

The invention is based upon the insight that non-divisible sprocket wheels are available on the market in a very large number of sizes and at relatively low prices. According to the invention, this insight is used by manufacturing each half of the divisible sprocket wheel, which halves are identical, from one non-divisible sprocket wheel. Hence, for a divisible sprocket wheel, two non-divisible sprocket wheels are needed. However, for smaller series, this is many times cheaper than manufacturing a separate mold. The wheel halves obtained with the method according to the invention are positioned against each other by their predetermined face portions and interconnected by fasteners via the openings.

If the disk-shaped body of the indivisible sprocket wheel forms a continuous face, the predetermined face portions, after division of the wheel, can be thinned by means of milling, in order that when the wheel halves are positioned onto each other, the disk-shaped body has in the area where the wheel halves overlap the same thickness as in the rest of the wheel.

However, it is also possible to take a possible divisibility into account already during the manufacture of indivisible wheels, by shifting the above-mentioned face portions in axial direction from the plane of the disk-shaped body, viz. by displacing a first face portion in an axial direction and the second face portion in the opposite axial direction. In this manner, the milling operation is dispensed with and the firmness of the mounted wheel is further increased. Adjusting the mold for the indivisible wheel can be realized at minimal costs.

Hence, the invention also provides an indivisible sprocket wheel having a complete toothed rim, a hub opening and a disk-shaped body extending between the hub opening and the toothed rim, characterized in that the disk-shaped body comprises two face portions located radially opposite each other on both sides of the hub opening, one of these face portions being staggered in axial direction to a first side relative to the plane of the disk-shaped body and the other being staggered in axial direction to a second, opposite side.

The invention also relates to a divisible sprocket wheel manufactured according to the method of the invention, wherein the two wheel halves are interconnected by means of fasteners extending through the priorly formed openings.

The invention will hereinafter be further described on the basis of an exemplary embodiment with reference to the accompanying drawings. In these drawings:
Fig. 1 is an elevation of a wheel half of a sprocket wheel according to the invention;
Fig. 2 is an elevation of a sprocket wheel wherein both wheel halves are mounted together;
Fig. 3 shows a section taken on the line II-II in Fig. 2, in a single wheel half;
Fig. 4 shows a section taken on the line III-III in Fig. 2, in a single wheel half; and
Fig. 5 shows a section taken on the line IV-IV in Fig. 2.

In the Figures, identical parts are designated by identical reference numerals.

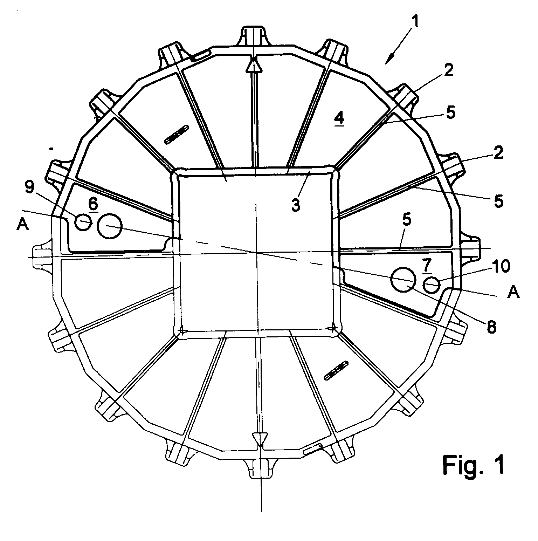

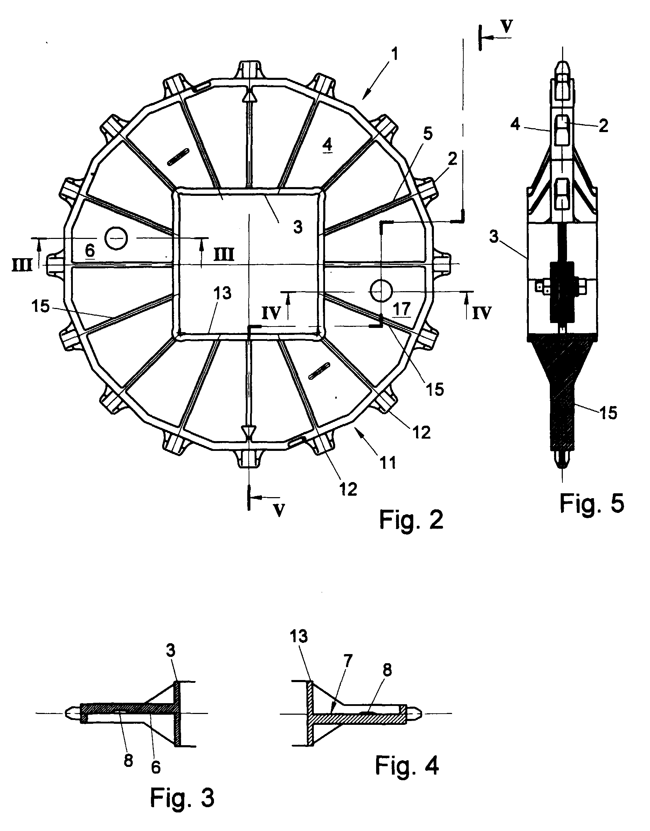

Fig. 1 shows a half of a sprocket wheel which as a whole is indicated by reference numeral 1. The wheel half comprises a toothed rim having teeth 2, a hub portion 3 to be positioned around a shaft, and a disk-shaped body 4 located between the toothed rim and the hub portion. The body can be provided with reinforcing ribs 5 whose height may gradually increase from the toothed rim towards the hub portion, as shown in Fig. 5.

The wheel half 1 is formed from a complete sprocket wheel, whose non-used portion is shown in thin lines in Fig. 1. The wheel half 1 is obtained by a sawing operation along the continuous thick line A-A in Fig. 1 and by subsequently thinning the circular segments 6 and 7 of the sprocket wheel body, which segments adjoin the sawing line A-A and are located between the sawing line and the next rib 5, as appears from Figs. 3 and 4 respectively. Obviously, it is also possible to thin a smaller portion than the segments 6 or 7 by milling, or, if necessary, a larger portion. In practice, however, the solution shown has proved to be highly satisfactory and to provide the sprocket wheel with sufficient firmness.

Another possibility is to make use of an indivisible wheel whose face portions 6 and 7 are already priorly formed at the location shown, i.e. staggered in axial direction to both sides by a simple adaptation of the mold for an indivisible wheel. Thus, the milling operation is dispensed with.

Preferably, yet not necessarily, for an optimal positioning of the wheel halves relative to each other, there are further provided a cam-shaped raised portion 8 in the segment 7 and a recessed portion 8' in the segment 6. Further, holes 9 and 10 are drilled in the above-mentioned portions, through which fasteners, not shown, can be passed for mounting the wheel halves together.

The second wheel half 11 is manufactured from a second complete sprocket wheel in precisely the same manner as the wheel half 1 and is identical thereto. The parts of wheel half 11 are designated by the same reference numerals as the parts of wheel half 1, but increased by 10. The wheel halves 1 and 11 are combined into one divisible sprocket wheel by positioning the segment 6 of the wheel half 1 against the segment 17 of the wheel half 11, and the segment 7 of the wheel half 1 against the segment 16 of the wheel half 11, causing the respective cam-shaped raised and recessed portions to interlock and the holes for the fastening bolts to register. Of course, it is also possible to provide these holes only after the wheel halves are positioned one onto the other.

A major advantage of the embodiment shown is that the teeth of the sprocket wheel, on which the greatest forces are exerted, remain entirely intact.

With the sprocket wheel according to the invention, a substantial saving of costs is realized. The material and labor costs for manufacturing the sprocket wheel according to the invention are approximately 10% of the costs of a sprocket wheel manufactured in a specially formed mold.

Obviously, the invention is not limited to the exemplary embodiment shown, but is applicable to any type of fixed sprocket wheel.

## Claims

1. A method for manufacturing a divisible sprocket wheel manufactured from plastic, comprising two wheel halves, each wheel half having a toothed rim portion, a hub portion and a disk-shaped body connecting the toothed rim portion and the hub portion, **characterized in that** from a first indivisible sprocket wheel having a complete toothed rim, a first wheel half is manufactured by dividing the first indivisible sprocket wheel substantially into two parts along a predetermined radial dividing line, that from a second indivisible sprocket wheel having a complete toothed rim, the second wheel half is manufactured by dividing the second indivisible sprocket wheel substantially into two parts along the same predetermined dividing line as the first indivisible sprocket wheel, that after the division, each of the wheel halves is made thinner in predetermined portions of the body of the sprocket wheel, which portions are located on both sides of the hub opening and adjoin the dividing line, and that both thus formed sprocket wheel halves are provided, in the predetermined portions adjoining the dividing line, with axial openings for receiving fasteners.

2. A method for manufacturing a divisible sprocket wheel manufactured from plastic, comprising two wheel halves, each wheel half having a toothed rim portion, a hub portion and a disk-shaped body connecting the toothed rim portion and the hub portion, characterized in that from a first indivisible sprocket wheel having a complete toothed rim and whose disk-shaped body comprises two face portions located radially opposite each other on both sides of the hub opening, one of said face portions being staggered in axial direction to a first side relative to the plane of the disk-shaped body, and the other being staggered in axial direction to a second, opposite side, a first wheel half is manufactured by dividing the first indivisible sprocket wheel substantially into two parts along a predetermined radial dividing line adjoining the opposite face portions, that from a second indivisible sprocket wheel having a complete toothed rim, which is identical to the first indivisible sprocket wheel, the second wheel half is manufactured by dividing the second indivisible sprocket wheel substantially into two parts along the same predetermined dividing line as the first indivisible sprocket wheel, and that both thus formed sprocket wheel halves are provided, in their opposite face portions, with openings for receiving fasteners.

3. A method according to claim 1 or 2, characterized in that each of the predetermined portions extends over a circular segment of the disk-shaped body of the sprocket wheel, which substantially corresponds to the distance between two successive teeth of the toothed rim.

4. A method according to claim 1, 2 or 3, characterized in that the predetermined portions have been or are provided with cam-shaped raised and recessed portions whereby the wheel halves can be positioned relative to each other.

5. A divisible sprocket wheel manufactured according to the method according to any one of claims 1-4, wherein the two wheel halves are interconnected by means of fasteners extending through the preformed openings.

6. An indivisible sprocket wheel having a complete toothed rim, a hub opening and a disk-shaped body extending between the hub opening and the toothed rim, characterized in that the disk-shaped body comprises two face portions located radially opposite each other on both sides of the hub opening, one of said face portions being staggered in axial direction to a first side relative to the plane of the disk-shaped body and the other being staggered in axial direction to a second, opposite side.
